# EUROPÄISCHE PATENTSCHRIFT

(11) **EP 2 342 130 B1**
(45) Veröffentlichungstag und Bekanntmachung des Hinweises auf die Patenterteilung: **26.09.2012**
(21) Anmeldenummer: 09743897.2
(22) Anmeldetag: 29.10.2009
(51) Int. Cl.: B64F 5/00

(54) **VORRICHTUNG ZUR TEMPORÄREN LAGEFIXIERUNG VON ZWEI ZUSAMMEN ZU FÜGENDEN RUMPFSEKTIONEN**
DEVICE FOR TEMPORARILY FIXING IN POSITION TWO FUSELAGE SECTIONS TO BE JOINED
DISPOSITIF POUR FIXER TEMPORAIREMENT EN POSITION DEUX TRONÇONS DE FUSELAGE À ASSEMBLER

(30) Priorität: 05.11.2008 DE 102008043490; 05.11.2008 US 111590 P
(43) Veröffentlichungstag der Anmeldung: 13.07.2011
(73) Patentinhaber: Airbus Operations GmbH, 21129 Hamburg (DE)
(72) Erfinder: BENSE, Rolf, 21635 Jork (DE); BAUSEN, Dirk, 21698 Harsefeld (DE); SAUERMANN, Axel, 21717 Deinste-Helmste (DE)
(74) Vertreter: Isarpatent
(86) Internationale Anmeldenummer: PCT/EP2009/064281
(87) Internationale Veröffentlichungsnummer: WO 2010/052164

(56) Entgegenhaltungen:
- EP-A1- 1 450 053
- EP-A2- 1 132 164
- US-A1- 2003 221 306

## Beschreibung

Die Erfindung betrifft eine Vorrichtung zur Lagefixierung einer ersten in einem Querstoßbereich mit einer zweiten zusammen zufügenden Rumpfsektion, wobei die erste Rumpfsektion mit einer ersten Haut und die zweite Rumpfsektion mit einer zweiten Haut beplankt ist.

Im modernen Flugzeugbau wird standardmäßig die Sektionsbauweise bei der Integration von Flugzeugrümpfen angewendet. Hierbei wird eine Vielzahl von Rumpfsektionen entlang von Quernähten zur Bildung der Rumpfzelle des Flugzeugs zusammengefügt. Die Rumpfsektionen wiederum werden mit mindestens zwei Schalensegmenten unter Schaffung von Längsnähten hergestellt. Innenseitig verfügen die Rumpfsektionen über hintereinander angeordnete Ringspante, die außenseitig mit der Rumpfzellenhaut beplankt sind. Zur weiteren Aussteifung der Rumpfzellenstruktur und insbesondere der Rumpfzellenhaut verlaufen in Längsrichtung der Rumpfsektion parallel zueinander beabstandet, um den Umfang der Rumpfsektion hinweg verteilt, eine Vielzahl von Längsversteifungsprofilen.

Die Verbindung der Rumpfsektionen untereinander im Querstoßbereich erfolgt bevorzugt durch Niet- oder Bolzenverbindungen. Zur Einbringung der Nieten und Bolzen sind daher im Querstoßbereich der zu fügenden Rumpfsektionen eine Vielzahl von Bohrungen einzubringen.

Nach Maßgabe des üblicherweise angewendeten Verfahrens werden die Rumpfsektionen zunächst zueinander ausgerichtet. Anschließend werden circa 20 % der insgesamt zur Schaffung der vollständigen Verbindung erforderlichen Bohrungen im Querstoßbereich der Rumpfsektion unter Zuhilfenahme von Bohrschablonen eingebracht. Danach müssen die Rumpfsektionen erneut getrennt werden, um etwaig vorhandene Bohrspäne aus dem Querstoßbereich vollständig zu entfernen. Anschließend werden die Rumpfsektionen erneut in Relation zueinander ausgerichtet und temporäre Fixiermittel in weiteren eingebrachten Bohrungen zur Lagefixierung der Rumpfsektionen eingesetzt. Im Anschluss daran werden die Befestigungsmittel, beispielsweise Nieten oder Bolzen, in die Bohrungen eingebracht und somit die Rumpfsektionen im Querstoßbereich verbunden. Abschließend können die temporären Fixiermittel entfernt und in die frei gewordenen Bohrungen die endgültigen Befestigungsmittel, wie zum Beispiel Nieten oder Bolzen, eingesetzt und angezogen werden. Zur Schaffung einer kompletten Quernaht zwischen zwei Rumpfsektionen einer Flugzeugrumpfzelle sind im Allgemeinen mehrere 1.000 Bohrungen und eine entsprechende Anzahl von Verbindungselementen in diese einzubringen.

Der Hauptnachteil dieser Vorgehensweise liegt darin, dass die zusammen zu fügenden Rumpfsektionen zweimal zueinander ausgerichtet bzw. positioniert werden müssen, um die unvermeidbar entstehenden Bohrspäne beim Einbringen der Vorbohrungen im Querstoßbereich zu entfernen. Hierdurch ergibt sich ein unnötig hoher Fertigungsaufwand. Darüber hinaus verschlechtert sich die Fertigungsgenauigkeit durch den zweimaligen Vorgang des Ausrichtens.

Aufgabe der Erfindung ist es daher, eine Vorrichtung zu schaffen, mittels derer zwei zusammen zu fügende Rumpfsektionen in ihrer relativen Lage zueinander temporär fixiert werden können, ohne dass das Einbringen von (Vor-)Bohrungen in den Querstoßbereich erforderlich wäre und demzufolge eine erneute Trennung der Rumpfsektionen zum Zwecke des Entfernens von Bohrspänen entbehrlich ist.

Diese Aufgabe wird durch eine Vorrichtung mit den Merkmalen des Patentanspruchs 1 gelöst.

Dadurch, dass die Rumpfsektionen mit mindestens einem Klemmelement im Querstoßbereich temporär verbindbar sind,
ist das Einbringen von (Fixier-)Bohrungen zur Befestigung von temporären Fixierelementen, insbesondere in Gestalt von so genannten Schraub-Heftnieten bzw. Schraub-Klemmnieten, nicht mehr erforderlich. Das arbeitsintensive erneute Trennen der Rumpfsektionen zur Entfernung von Bohrspänen, die infolge der Einbringung der (Fixier-)Bohrungen im Querstoßbereich entstehen, entfällt.

Eine vorteilhafte Weiterbildung der Vorrichtung sieht vor, dass eine Vielzahl von Klemmelementen vorgesehen ist, die insbesondere gleichmäßig zueinander beabstandet umfangsseitig im Querstoßbereich positionierbar sind.
Hierdurch wird eine weitgehend verzugsfreie Lagefixierung der zusammen zu fügenden Rumpfsektionen erreicht.

Alternativ kann die Vorrichtung zur Lagefixierung beispielsweise auch nur ein Klemmelement umfassen. In diesem Fall wird das eine Klemmelement beispielsweise in einer "12-Uhr-Position" bzw. bei 0° angeordnet, so dass in diesem Bereich die ersten Verbindungsbohrungen eingebracht werden können. Anschließend wird das Klemmelement zirkulär in geeigneten Winkelschritten zwischen beispielsweise 15° und 90° versetzt (so genanntes "Pilgerschrittverfahren"), um auch die weiteren Bohrungen und Verbindungselemente in den anschließenden Umfangsbereichen des Querstoßes einbringen zu können. Eine solche Vorrichtung weist zwar einen geringen herstellungstechnischen und konstruktiven Aufwand auf, erfordert jedoch mehrere Fertigungsschritte, um den Querstoß zu vervollständigen.

Nach Maßgabe der Erfindung ist vorgesehen, dass die Klemmelemente jeweils einen Halter und einen Gegenhalter aufweisen.
Infolge der zweiteiligen Ausbildung der Klemmelemente können diese im Querstoßbereich auch bei zusammen gefahrenen Rumpfsektionen im Innenbereich bzw. im Außenbereich jeweils gegenüberliegend angeordnet werden. Bevorzugt sind im Innenbereich und im Außenbereich der zusammen zu fügenden Rumpfsektionen jeweils insbesondere optische Markierungen angebracht, mit denen die exakte Positionierung der Halter und der Gegenhalter möglich ist. Beispielsweise kann der Halter eines Klemmelementes im Außenbereich und der Gegenhalter des Klemmelements im Innenbereich auf der Rumpfzellenhaut bzw. auf einer Querstoßlasche, die im Fall einer Stoßverbindung der Rumpfzellenhäute innenseitig erforderlich ist, im Querstoßbereich bzw. im Quernahtbereich angeordnet sein. Alternativ ist auch eine in Bezug auf den Innen- und den Außenraum der zufügenden Rumpfsektionen umgekehrte Anordnung der Halter und Gegenhalter möglich. Die Wechselwirkung zwischen dem mindestens einen Halter und dem mindestens einen Gegenhalter kann beispielsweise durch ein elektromagnetisches Feld bewirkt werden.

Gemäß der Erfindung ist vorgesehen, dass der mindestens eine Halter ein Mehrzahl von Halterfuhrungsbohrungen der mindestens eine Gegenhalter eine Mehrzahl von Genhalterfuhrungsbohrungen zur exakten Lagebestimmung von im Querstoßbereich einzubringenden Bohrungen aufweist. Hierdurch wird die Führung eines Bohrers zum Einbringen der Befestigungslöcher für die Verbindungselemente, wie Niete oder Bolzen, erleichtert. Darüber hinaus wird das unkontrollierte Herausfallen von Bohrspänen in den Innenbereich der zu fügenden Rumpfsektionen verhindert. Die Halterführungsbohrungen oder die Gegenhalterführungsbohrungen können optional als Sackbohrungen ausgebildet sein. Somit erfüllt die Vorrichtung neben ihrer Klemm- und Fixierwirkung zugleich die einer Bohrschablone zum präzisen Setzen der erforderlichen Bohrungen im Querstoßbereich.

Nach Maßgabe einer weiteren vorteilhaften Ausführungsform fluchten die Halterführungsbohrungen und die Gegenhalterführungsbohrungen jeweils zueinander. Infolge dieser versatzfreien Ausrichtung können die Rumpfsektionen im Querstoßbereich leicht durchgebohrt werden, ohne dass ein Bohrwerkzeug Scherkräften ausgesetzt ist.

Eine weitere vorteilhafte Weiterentwicklung der Vorrichtung sieht vor, dass der Halter mindestens einen Magneten, insbesondere einen Elektromagneten und/oder einen Permanentmagneten aufweist.

Durch die Magnete wird eine berührungs- und vor allem bohrungslose Lagefixierung der zueinander ausgerichteten Rumpfsektionen möglich, wodurch das Eintragen von Bohrspäne zwischen die Häute im Querstoßbereich verhindert wird und ein erneutes Trennen der bereits positionierten Rumpfsektionen zum Entfernen der Bohrspäne entfällt. Eine Materialstärke der Rumpfsektionen bzw. eine Dicke einer Querstoßlasche im Fall einer Stoßverbindung der beiden Häute stellen für den aus jeweils gegenüberliegend angeordneten Haltern und Gegenhaltern gebildeten magnetischen Kreis einen Luftspalt dar, der vom Magnetfeld der Magneten unter Inkaufnahme eines erheblichen Streufeldes überbrückt werden muss. Denn die Häute bzw. die Querstoßlasche sind in der Regel mit einem nicht magnetischen bzw. paramagnetischen Aluminiumlegierungsmaterial gebildet. Eine Summe der Materialstärken der genannten Komponenten kann im Querstoßbereich der Rumpfsektionen bis zu 10 mm betragen, so dass die Magnete eine hohe Feldstärke erzeugen müssen, um bei Häuten mit großer Materialstärke und optionalen Querstoßlaschen noch eine ausreichend hohe Klemmkraft aufbauen zu können. Die Magnete sind bevorzugt als Elektromagnete ausgebildet, um deren Ablösung durch Stromlosschaltung nach der Beendigung der Bohr- und Nietarbeiten im Querstoßbereich zu erleichtern. Permanentmagnete weisen demgegenüber den Vorteil auf, dass keine aufwändige elektrische Energieversorgung über querschnittstarke Kabel erforderlich ist. Permanentmagnete aufweisende Halter und die gegenüberliegend angeordneten Gegenhalter sind jedoch in der Regel aufgrund der sehr hohen von den Permanentmagneten ausgehenden magnetischen Feldstärke nur unter hohem Krafteinsatz vom Querstoßbereich ablösbar.

Vorzugsweise weisen die Halter jeweils mindestens einen Magneten auf, während die Gegenhalter lediglich mit einem ferromagnetischen Material, das zur Erhöhung der magnetischen Flussdichte einen möglichst hohen µᵣ-Wert (bis zu 180.000) aufweist, gebildet sind, um den Widerstand des durch die Halter und Gegenhalter gebildeten magnetischen Kreises zu verringern.

Zur Erzeugung höherer Anziehungskräfte kann es erforderlich sein, sowohl die Halter als auch die Gegenhalter in den Klemmelementen mit jeweils gegenpoligen Magneten auszustatten. Insbesondere im Fall eines Einsatzes von Elektromagneten ergibt sich hieraus der Nachteil, dass die elektrischen Versorgungsleitungen für die Elektromagneten, die aufgrund der zu erzeugenden hohen magnetischen Feldstärke große Leitungsquerschnitte aufweisen müssen, sowohl in den Innenraum als auch in den Außenraum der zu fügenden Sektionen geführt werden müssen.

Die Magneten in den Klemmelementen werden - unbeschadet ihrer technischen Realisation als Permanentmagnet oder Elektromagnet - so dimensioniert, dass zwischen einem Halter und einem Gegenhalter eines jeden Klemmelements eine Kraftwirkung von mindestens 150 N entsteht. Hierdurch wird eine gegen Verrutschen ausreichend sichere Lagefixierung der Rumpfsektionen und darüber hinaus ein genügend hoher Anpressdruck zwischen den Häuten der Rumpfsektionen aufgebaut, um das Eindringen von Bohrspänen zwischen die Häute im Querstoßbereich zu unterbinden.

Weitere vorteilhafte Ausgestaltungen der Vorrichtung sind in den weiteren Patentansprüchen dargelegt.

In der Zeichnung zeigt:
- **Fig. 1**: Eine schematische Schnittdarstellung durch eine erste Ausführungsvariante eines Klemmelements der Vorrichtung mit außenliegendem Halter und innenliegendem Gegenhalter,
- **Fig. 2**: eine prinzipielle Schnittdarstellung durch eine zweite Ausführungsvariante eines Klemmelementes der Vorrichtung mit innenliegendem Halter und außenliegendem Gegenhalter,
- **Fig. 3**: eine erste Ausführungsvariante der Vorrichtung mit nur einem zirkulär applizierbaren Klemmelement, und
- **Fig. 4**: eine zweite Ausführungsvariante der Vorrichtung mit einer Vielzahl von gleichzeitig, gleichmäßig über den Umfang des Querstoßbereichs verteilt applizierten Klemmelementen.

In der Zeichnung weisen dieselben konstruktiven Elemente jeweils dieselbe Bezugsziffer auf.

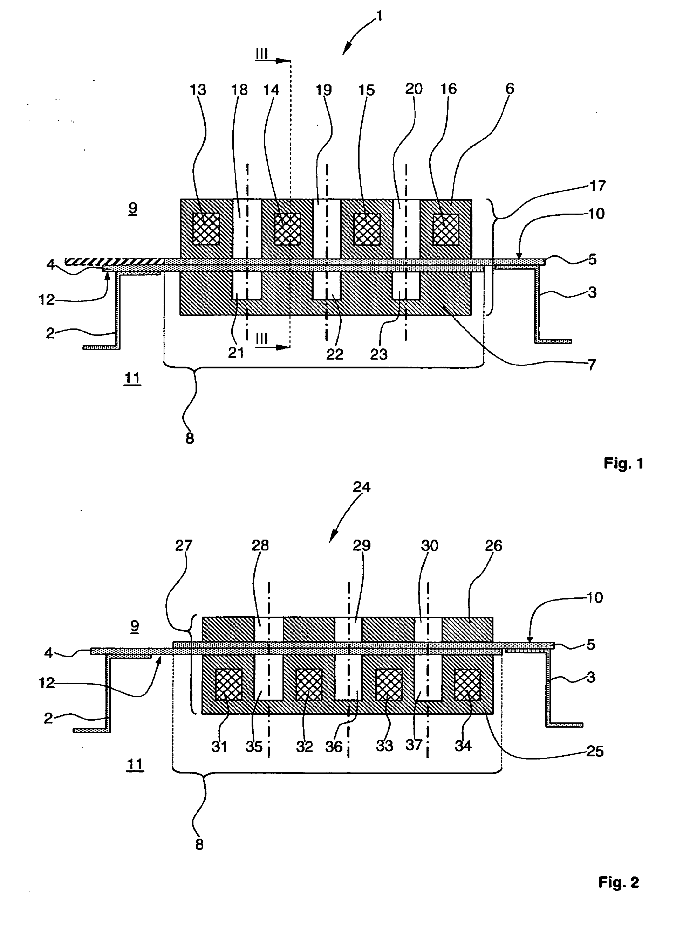

Die **Fig. 1** zeigt eine schematische Querschnittsdarstellung durch ein Klemmelement der erfindungsgemäßen Vorrichtung.

Eine Vorrichtung 1 zur Lagefixierung von zwei zusammen zu fügenden Rumpfsektionen 2,3, die jeweils mit einer Haut 4,5 beplankt sind, umfasst unter anderem einen Halter 6 und einen Gegenhalter 7. Die in einem Querstoßbereich 8 überlappend angeordneten Häute 4,5 der Rumpfsektionen 2,3 sollen durch Verbindungselemente, beispielsweise in der Gestalt von Nieten oder Bolzen, gefügt werden. Diese Verbindungselemente sind durch die strichpunktierten Linien angedeutet. Der Halter 6 ist in einem Außenbereich 9, das heißt im Bereich einer Außenseite 10 der zweiten Haut 5 positioniert, während der Gegenhalter 7 möglichst gegenüberliegend zum Halter 6 in einem Innenbereich 11 der Rumpfsektionen 2,3, das heißt im Bereich einer Innenseite 12 der ersten Haut 4 angeordnet ist. Die Ausrichtung des Halters 6 und des Gegenhalters 7 erfolgt durch nicht dargestellte, insbesondere optische, Markierungen, die im Bereich der zu fügenden Rumpfsektionen 4,5 vorab angebracht werden.

Die Vorrichtung 1 ist entsprechend einsetzbar, wenn die Häute 4,5 der beiden Rumpfsektionen 2,3 abweichend von der Darstellung der Fig. 2 nicht überlappend sondern auf Stoß zueinander angeordnet sind und durch eine zusätzliche innenliegende Querstoßlasche gefügt werden, da auch in einer solchen Konstellation eine vom Halter 6 und Gegenhalter 7 zu überbrückende Gesamtmaterialstärke (Haut und Querstoßlasche) nicht höher ist, als die resultierende Gesamtmaterialstärke von zwei überlappend gefügten Häuten 4,5. In diesem Fall wird eine innenliegende Querstoßlasche mit beiden Endbereichen der Häute 4,5 verbunden. In der Darstellung der Fig. 1 entspricht in einer solchen Konstellation die Querstoßlasche der bisherigen ersten Haut 4, während das schraffierte Rechteck mit gestrichelter Umrissdarstellung in diesem Fall die erste Haut andeutet. Jedoch würde eine Querstoßlasche bevorzugt mittig in Bezug auf den Querstoßbereich verlaufen.

Im gezeigten Ausführungsbeispiel ist der Halter 6 mit vier Magneten 13 bis 16 ausgestaltet. Der Gegenhalter 7 ist im gezeigten Ausführungsbeispiel einstückig mit einem bevorzugt ferromagnetischen Material gebildet, kann in einer alternativen Ausführungsvariante aber ebenfalls mit einer Anzahl von Magneten ausgestattet sein, die der im Halter 6 vorgesehenen Anzahl von Magneten 13 bis 16 entspricht. Letztendlich bildet der Halter 6 in Verbindung mit dem Gegenhalter 7 der Vorrichtung 1 ein magnetisches Klemmelement 17, durch das die Häute 4,5 der beiden Rumpfsektionen 2,3 während des Fügeprozesses bohrungslos unter Ausnutzung der Kraftwirkung eines Magnetfeldes fest aufeinander gepresst und hierdurch fixiert werden. Zugleich wird durch das magnetische Klemmelement 17 der Eintrag von Bohrspänen in den Querstoßbereich 8 zwischen den Häuten 4,5 verhindert, so dass zeitaufwändige Zwischenbearbeitungsschritte zum Entfernen der Bohrspäne entfallen.

Die vier Magnete 13 bis 16 können als Permanentmagneten oder mit Elektromagneten ausgestaltet sein. Alternativ ist auch der gleichzeitige Einsatz von Permanentmagneten und Elektromagneten denkbar. Für den Einsatz von Permanentmagneten spricht insbesondere die in Bezug auf das Bauvolumen erreichbare hohe magnetische Feldstärke sowie die nicht erforderliche Stromversorgung, während die Verwendung von Elektromagneten primär den Vorteil aufweist, dass durch einfaches Abschalten des Versorgungsstroms das magnetische Klemmelement 17 leicht von den Rumpfsektionen 2,3 abgelöst werden kann und zudem eine leichtere Ausrichtung des Klemmelements 17 im stromlosen Zustand möglich ist.

Ferner weist der Halter 6 drei durchgehende Halterführungsbohrungen 18 bis 20 auf, wodurch die räumliche Lage der für die Verbindungselemente erforderlichen Bohrungen in den Häuten 4,5 mit hoher Genauigkeit festgelegt wird. Darüber hinaus stellen die Halterführungsbohrungen 18 bis 20 eine Führung bzw. eine Bohrschablone für ein nicht dargestelltes Bohrwerkzeug bzw. einen Bohrer dar, das zum Einbringen der im Querstoßbereich 8 notwendigen Bohrungen Verwendung findet. Entsprechend zu den Halterführungsbohrungen 18 bis 20 verfügt der Gegenhalter 7 über drei, im gezeigten Ausführungsbeispiel optional durchgehende Gegenhalterführungsbohrungen 21 bis 23, wodurch ein vollständiges Durchbohren der Häute 4,5 ermöglicht wird und darüber hinaus das Hineinfallen von Bohrspäne in den Innenbereich 11 der Rumpfsektionen 2,3 verhindert wird. Alternativ (nicht dargestellt) können die Gegenhalterführungsbohrungen 21 bis 23 auch als Sackbohrungen ausgeführt sein. Die Halterführungsbohrungen 18 bis 20 sowie die Gegenhalterführungsbohrungen 21 bis 23 des Klemmelements 17 fluchten infolge der gegenüberliegenden Anordnung des Halter 6 und des Gegenhalter 7 bevorzugt jeweils zueinander, um eine Scherung bzw. ein Verklemmen des Bohrwerkzeugs während des Bohrprozesses zu vermeiden.

Die **Fig. 2** zeigt eine zweite Ausführungsvariante der erfindungsgemäßen Vorrichtung in einer Querschnittsdarstellung.

Beide Rumpfsektionen 2,3 mit den Häuten 4,5 sind im Querstoßbereich so zueinander ausgerichtet, dass dem Einbringen einer entsprechenden Anzahl von Bohrungen das Zusammenfügen der Rumpfsektionen 2,3 durch Vernieten und/oder Verbolzen folgen kann.

Im Unterschied zu der in Fig. 1 beschriebenen Variante umfasst diese Vorrichtung 24 ebenfalls einen Halter 25 und einen Gegenhalter 26, wobei aber der Gegenhalter 26 auf der Außenseite 10 der zweiten Haut 5 im Außenbereich 9 der Rumpfsektionen 2,3 angeordnet ist, während der (aktive) Halter 25 auf der Innenseite 12 der ersten Haut 4 im Innenbereich 11 der Rumpfsektionen 2,3 platziert ist. Der Halter 25 und der Gegenhalter 26 bilden wiederum ein Klemmelement 27 zur Lagefixierung der Rumpfsektionen 2,3 im jeweiligen Arbeitsbereich. Der Gegenhalter 26 verfügt über drei durchgehende Gegenhalterführungsbohrungen 28 bis 30 und ist bevorzugt mit einem ferromagnetischen Material gebildet, um den magnetischen Widerstand klein zu halten. Der Halter 25 ist wiederum mit vier Magneten 31 bis 34 ausgestattet, kann alternativ aber eine beliebige Anzahl von Magneten aufweisen. Die allseitig in den Halter 25 eingebetteten Magnete 31 bis 34 können mit Elektromagneten und/oder Permanentmagneten gebildet sein. Der Halter 25 ist bevorzugt gleichfalls einstückig mit einem ferromagnetischen Material gebildet. In das bevorzugt einstückig ausgeführte Gehäuse des Halters 25 sind ferner drei Halterführungsbohrungen 35 bis 37 eingebracht, die als Sackbohrungen ausgeführt sind. Alternativ können die Halterführungsbohrungen 35 bis 37 auch als durchgehende Bohrungen ausgestaltet sein. Die Gegenhalterführungsbohrungen 28 bis 30 des Gegenhalters 26 sowie die Halterführungsbohrungen 35 bis 37 des Halters 25 sind zueinander fluchtend angeordnet, um eine Scherung eines nicht dargestellten Bohrwerkzeug zu verhindern. Im Fall des Einsatzes von Elektromagneten kann die Anordnung nach Fig. 1 Vorteile aufweisen, da eine außenliegende Zuführung der elektrischen Versorgungskabel - unabhängig von bereits in den Rumpfsektionen vorhandenen elektrischen und hydraulischen Systemen - an die im Halter 6 integrierten Elektromagnete möglich. Andererseits kann im Fall einer inneren Anordnung der Halter 6 unter Umständen eine leichtere Zugänglichkeit für die Verlegung der Versorgungskabel gegeben sein, da keine separate, äußere Montageplattform notwendig ist.

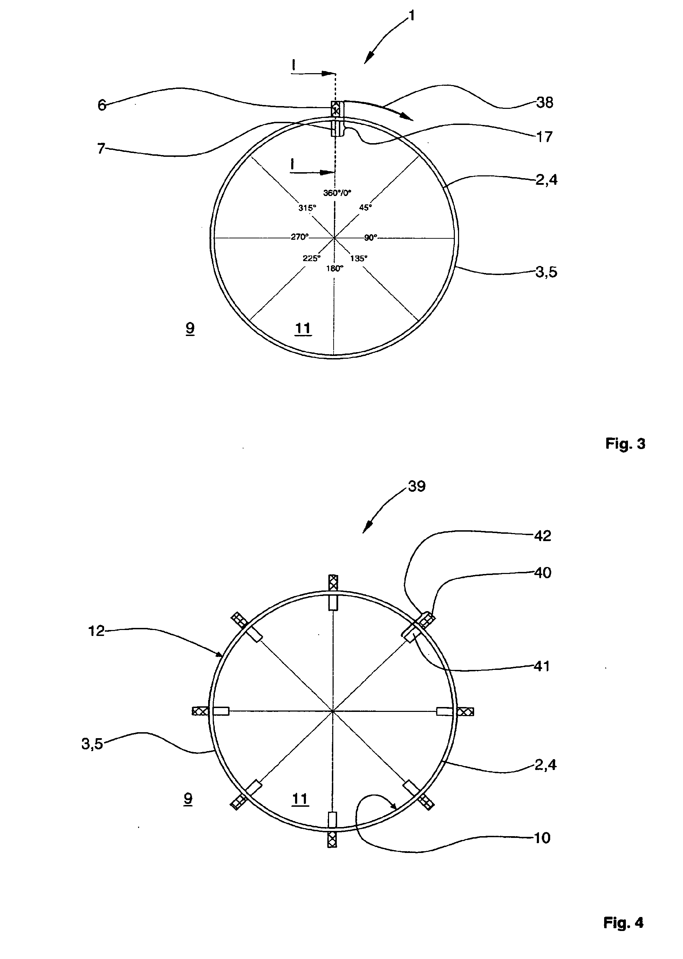

Die **Fig. 3** veranschaulicht anhand eines Schnittes durch die Vorrichtung 1 nach Fig. 1 entlang der Schnittlinie III-III die räumliche Platzierung der Vorrichtung 1 in Bezug zu den Rumpfsektionen 2,3 bzw. den Häuten 4,5.

Der aktive Halter 6 mit den darin befindlichen starken Magneten wird im Außenbereich 9 auf die zu fügenden Rumpfsektionen 2,3 aufgesetzt, während der passive Gegenhalter 7 im Innenbereich 11 platziert ist. Der Halter 6 und der Gegenhalter 7 bilden wiederum das Klemmelement 17 (vgl. Fig. 1). Infolge der zwischen dem Halter 6 und dem Gegenhalter 7 herrschenden starken Magnetkraft werden die Häute 4,5 der Rumpfsektionen 2,3 fest aneinander gepresst, so dass die für den Fügevorgang notwendigen Bohrungen ohne die Gefahr des Eindringens von Spänen zwischen die Häute 4,5 gesetzt werden können. Nach dem die erforderlichen Bohrungen gesetzt sind, wird die Vorrichtung 1 in Richtung eines schwarzen Pfeils 38 beispielsweise um einen Winkel von 45° versetzt, um auch in diesem Bereich die erforderlichen Bohrungen einbringen zu können. Dieser Vorgang wird solange wiederholt, bis die Quernaht zwischen den Rumpfsektionen 2,3 komplett fertig gestellt ist. Der Vorteil dieser Vorgehensweise liegt insbesondere darin, dass die Vorrichtung 1 lediglich einen Halter 6 und einen Gegenhalter 7 erfordert und durch das sukzessivzirkuläre Versetzen der Vorrichtung 1 eine lokale Aufwellung bzw. eine Auffaltung der Häute 4,5 vermieden wird. Ein Nachteil der Vorrichtung 1 ist jedoch, dass stets ein mehrmaliges Versetzen der Vorrichtung 1 um den Umfang der Rumpfsektionen 2,3 zur Fertigstellung der Quernaht im Querstoßbereich 8 erforderlich ist, wodurch sich der Arbeitsaufwand erhöht. Zum vollständigen Verbinden bzw. Fügen der Rumpfsektionen 2,3 sind in der Regel mehrere hundert Bohrungen notwendig, in die die Verbindungselemente, wie zum Beispiel Bolzen oder Niete eingesetzt werden.

Die **Fig. 4** zeigt eine weitere Ausführungsvariante einer erfindungsgemäßen Vorrichtung.

Eine Vorrichtung 39 umfasst im gezeigten Ausführungsbeispiel insgesamt acht im Außenbereich 9 positionierte Halter sowie acht im Innenbereich jeweils gegenüberliegend zu den Haltern angeordnete Gegenhalter, die zusammen jeweils ein Klemmelement bilden. Ein Halter 40 und ein Gegenhalter 41 - die zusammen ein Klemmelement 42 darstellen - sind repräsentativ für alle übrigen mit einer Bezugsziffer versehen. In Abhängigkeit von den Querschnittsabmessungen der zu fügenden Rumpfsektionen 2,3 wird man die Anzahl der vorzugsweise gleichmäßig zueinander umfangsseitig im Querstoßbereich bzw. im Quernahtbereich angeordneten Klemmelemente 42 auf bis zu 128 erhöhen, um eine möglichst gleichmäßige Klemmwirkung zu erreichen.

Durch die Vorrichtung 39 wird es möglich, die Rumpfsektionen 2,3 bzw. die Häute 4,5 über ihren gesamten Umfang hinweg im Quernahtbereich in der gewünschten Montageposition zu fixieren, so dass prinzipiell sämtliche Bohrungen, die für den Fügeprozess durch Nieten und/oder Verbolzen erforderlich sind, zeitgleich oder zumindest in mehreren Umfangssektoren der Rumpfsektionen 2,3 gleichzeitig eingebracht werden können, wobei zugleich das Eindringen von Spänen zwischen die Häute 4,5 sicher verhindert wird. Daher entfallen nach einem erfolgreichen Fügeprozess weitere Fertigungszwischenschritte, wie beispielsweise das nachträgliche Entfernen von Bohrspänen.

Ein Hauptvorteil der Vorrichtung 39 liegt vor allem darin, dass ein zeitgleiches Arbeiten im Fügebereich zwischen den Rumpfsektionen 2,3 möglich ist, wodurch sich die Montagezeiten erheblich verringern. Infolge der gleichzeitigen Klemmung wird jedoch eine Faltenbildung bzw. Stauchung in den Häuten 4,5 verhindert.

### Bezugszeichenliste

- 1: Vorrichtung
- 2: erste Rumpfsektion
- 3: zweite Rumpfsektion
- 4: erste Haut (erste Rumpfsektion/Querstoßlasche)
- 5: zweite Haut (zweite Rumpfsektion)
- 6: Halter
- 7: Gegenhalter
- 8: Querstoßbereich
- 9: Außenbereich (Rumpfsektionen)
- 10: Außenseite (2. Haut)
- 11: Innenbereich (Rumpfsektionen)
- 12: Innenseite (1. Haut)
- 13: Magnet
- 14: Magnet
- 15: Magnet
- 16: Magnet
- 17: Klemmelement
- 18: Halterführungsbohrung
- 19: Halterführungsbohrung
- 20: Halterführungsbohrung
- 21: Gegenhalterführungsbohrung
- 22: Gegenhalterführungsbohrung
- 23: Gegenhalterführungsbohrung
- 24: Vorrichtung
- 25: Halter
- 26: Gegenhalter
- 27: Klemmelement
- 28: Gegenhalterführungsbohrung
- 29: Gegenhalterführungsbohrung
- 30: Gegenhalterführungsbohrung
- 31: Magnet
- 32: Magnet
- 33: Magnet
- 34: Magnet
- 35: Halterführungsbohrung
- 36: Halterführungsbohrung
- 37: Halterführungsbohrung
- 38: Pfeil
- 39: Vorrichtung
- 40: Halter
- 41: Gegenhalter
- 42: Klemmelement

## Patentansprüche

1. Vorrichtung (1, 24, 39) zur Lagefixierung einer ersten in einem Querstoßbereich (8) mit einer zweiten zusammen zufügenden Rumpfsektion (2, 3), wobei die erste Rumpfsektion (2) mit einer ersten Haut (4) und die zweite Rumpfsektion (3) mit einer zweiten Haut beplankt ist, umfassend mindestens ein Klemmelements, wobei die Rumpfsektionen (2, 3) mit dem mindestens einen Klemmelement (17, 27, 42) im Querstoßbereich (8) temporär verbindbar sind, wobei des mindestens eine Klemmelement (17, 27, 42) jeweils einen Halter (6, 25, 40) und einen Gegenhalter (7, 26, 41) aufweist **dadurch gekennzeichnet, dass** der Halter (6, 25, 40) eine Mehrzahl von Halterführungsbohrungen (18-20, 35-37) und der Gegenhalter (7, 26, 41) eine der Mehrzahl von Halterführungsbohrungen (18-20, 35-37) entsprechende Mehrzahl von Gegenhalterführungsbohrongen (21-23, 28-30) zur exakten Lagebestimmung von im Querstoßbereich (8) einzubringenden Bohrungen aufweist.

2. Vorrichtung (1, 24, 39) nach Patentanspruch 1, **dadurch gekennzeichnet, dass** eine Vielzahl von Klemmelementen (17, 27, 42) vorgesehen ist, die insbesondere gleichmäßig zueinander beabstandet umfangsseitig im Querstoßbereich (8) positionierbar sind.

3. Vorrichtung (1, 24, 39) nach Patentanspruch 1 oder 2, **dadurch gekennzeichnet, dass** die Mehrzahl von Halterführungsbohrungen (18-20, 35-37) und die Mehrzahl von Gegenhalterführungsbohrungen (21-23, 28-30) jeweils zueinander fluchten.

4. Vorrichtung (1, 24, 39) nach einem der Patentansprüche 1 bis 3, **dadurch gekennzeichnet, dass** der mindestens eine Halter (6, 25, 40) mindestens einen Magneten (13-16, 31-34), insbesondere einen Elektromagneten und/oder einen Permanentmagneten, aufweist.

5. Vorrichtung (1, 24, 39) nach einem der Patentansprüche 1 bis 4, **dadurch gekennzeichnet, dass** der mindestens eine Gegenhalter (7, 26, 41) mit einem ferromagnetischen Material gebildet ist und/oder einen Magneten (13-16, 31-34), insbesondere einen Elektromagneten und/oder einen Permanentmagneten, aufweist.

6. Vorrichtung (1, 24, 39) nach einem der Patentansprüche 1 bis 5, **dadurch gekennzeichnet, dass** zwischen dem mindestens einen Halter (6, 25, 40) und dem mindestens einen Gegenhalter (7, 26, 41) eine magnetische Anziehungskraft von jeweils bis zu 300 N durch die beiden Häute (4, 5) der zu fügenden Rumpfsektionen (2, 3) hindurch wirkbar ist.

7. Vorrichtung (1, 24, 39) nach einem der Patentansprüche 1 bis 6, **dadurch gekennzeichnet, dass** der mindestens eine Halter (6, 25, 40) im Bereich einer Außenseite (10) der zweiten Haut (5) und der mindestens eine Gegenhalter (7, 26, 41) im Bereich einer Innenseite (12) der ersten Haut (4) jeweils gegenüberliegend im Quezstoßbereich (8) anordenbar sind.

8. Vorrichtung (1, 24, 39) nach einem der Patentansprüche 1 bis 7, **dadurch gekennzeichnet, dass** der mindestens eine Halter (6, 25, 40) im Bereich einer Innenseite (12) der ersten Haut (4) und der mindestens eine Gegenhalter (7, 26, 41) im Bereich einer Außenseite (10) der zweiten Haut (5) jeweils gegenüberliegend im Querstoßbereich (8) anordenbar sind.

9. Vorrichtung (1, 24, 39) nach einem der Patentansprüche 1 bis 8, **dadurch gekennzeichnet, dass** eine Materialstärke der beiden Häute (4, 5) und die einer Querstoßlasche jeweils bis zu 5 mm beträgt.

## Claims

1. Device (1, 24, 39) for fixing in position a first fuselage section (2) which is to be joined together in a transverse joint region (8) with a second fuselage section (3), wherein the first fuselage section (2) is planked with a first skin (4) and the second fuselage section (3) is planked with a second skin, comprising at least one clamping element, wherein the fuselage sections (2, 3) can be connected temporarily to the at least one clamping element (17, 27, 42) in the transverse joint region (8), wherein the at least one clamping element (17, 27, 42) comprises in each case a support (6, 25, 40) and a counter support (7, 26, 41), **characterised in that** the support (6, 25, 40) comprises a plurality of support guide bores (18-20, 35-37) and the counter support (7, 26, 41) comprises a plurality of counter support guide bores (21-23, 28-30), which corresponds to the plurality of support guide bores (18-20, 35-37), for precise determination of the position of bores to be introduced in the transverse joint region (8).

2. Device (1, 24, 39) as claimed in claim 1, **characterised in that** a multiplicity of clamping elements (17, 27, 42) is provided which can be positioned over the periphery in the transverse joint region (8), in particular in a uniformly spaced manner with respect to each other.

3. Device (1, 24, 39) as claimed in claim 1 or 2, **characterised in that** the plurality of support guide bores (18-20, 35-37) and the plurality of counter support guide bores (21-23, 28-30) are mutually aligned in each case.

4. Device (1, 24, 39) as claimed in any one of claims 1 to 3, **characterised in that** the at least one support (6, 25, 40) comprises at least one magnet (13-16, 31-34), in particular an electromagnet and/or a permanent magnet.

5. Device (1, 24, 39) as claimed in any one of claims 1 to 4, **characterised in that** the at least one counter support (7, 26, 41) is formed with a ferromagnetic material and/or comprises a magnet (13-16, 31-34), in particular an electromagnet and/or a permanent magnet.

6. Device (1, 24, 39) as claimed in any one of claims 1 to 5, **characterised in that** a magnetic attractive force of up to 300 N in each case can be exerted between the at least one support (6, 25, 40) and the at least one counter support (7, 26, 41) through the two skins (4, 5) of the fuselage sections (2, 3) to be joined.

7. Device (1, 24, 39) as claimed in any one of claims 1 to 6, **characterised in that** the at least one support (6, 25, 40) can be disposed in the region of an outer face (10) of the second skin (5) and the at least one counter support (7, 26, 41) can be disposed in the region of an inner face (12) of the first skin (4) in each case opposite one another in the transverse joint region (8).

8. Device (1, 24, 39) as claimed in any one of claims 1 to 7, **characterised in that** the at least one support (6, 25, 40) can be disposed in the region of an inner face (12) of the first skin (4) and the at least one counter support (7, 26, 41) can be disposed in the region of an outer face (10) of the second skin (5) in each case opposite one another in the transverse joint region (8).

9. Device (1, 4, 29) as claimed in any one of claims 1 to 8, **characterised in that** a material thickness of the two skins (4, 5) and that of a transverse joint strap are each up to 5 mm.

## Revendications

1. Dispositif (1,24,39) pour fixer en position un premier tronçon de fuselage (2, 3) à assembler avec un deuxième tronçon dans une zone de jonction transversale (8),
le premier tronçon de fuselage (2) étant recouvert d'une première peau (4) et le deuxième tronçon de fuselage (3) étant recouvert d'une deuxième peau (5), comprenant au moins un élément de serrage,
les tronçons de fuselage (2,3) pouvant être reliés temporairement à l'aide d'au moins un élément de serrage (17, 27, 42) dans la zone de jonction transversale (8), l'au moins un élément de serrage (7, 27, 42) présentant chacun un élément de maintien (6, 25, 40) et un élément de maintien antagoniste (7, 26, 41),
**caractérisé par le fait que** l'élément de maintien (6, 25, 40) présente une multitude d'alésages de guidage des éléments de maintien (18-20, 35-37) et l'élément de maintien antagoniste (7, 26, 41) présente une multitude d'alésages de guidage des éléments de maintien (21-23, 28-30) correspondant à la multitude d'alésages de guidage des éléments de maintien (18-20, 35-37) pour la définition de la position exacte d'alésages devant être apportés dans la zone de jonction transversale (8).

2. Dispositif (1, 24, 39) selon la revendication 1, **caractérisé par le fait qu'**une multitude d'éléments de serrage (17, 27, 42) sont prévus, qui peuvent être positionnés notamment à distance régulière entre eux sur la circonférence dans la zone de jonction transversale (8).

3. Dispositif (1, 24, 39) selon la revendication 1 ou 2, **caractérisé par le fait que** la multitude d'alésages de guidage des éléments de maintien (18-20, 35-37) et la multitude d'alésages de guidage des éléments de maintien antagonistes (21-23, 28-30) sont respectivement alignés.

4. Dispositif (1, 24, 39) selon l'une des revendications 1 à 3, **caractérisé par le fait qu'**au moins un élément de maintien (6, 25, 40) présente au moins un aimant (13-16, 31-34), notamment un électroaimant et/ou un aimant permanent.

5. Dispositif (1, 24, 39) selon l'une des revendications 1 à 4, **caractérisé par le fait qu'**au moins un élément de maintien antagoniste (7, 26, 41) est formé d'un matériau ferromagnétique et/ou présente un aimant (13-16, 31-34), notamment un électroaimant et/ou un aimant permanent.

6. Dispositif (1, 24, 39) selon l'une des revendications 1 à 5, **caractérisé par le fait qu'**une force d'attraction magnétique allant respectivement jusqu'à 300 N peut agir à travers les deux peaux (4, 5) des tronçons de fuselage (2, 3) à assembler entre au moins un élément de maintien (6, 25, 40) et au moins un élément de maintien antagoniste (7, 26, 41).

7. Dispositif (1, 24, 39) selon l'une des revendications 1 à 6, **caractérisé par le fait qu'**au moins un élément de maintien (6, 25, 40) dans la zone d'une face externe (10) de la seconde peau (5) et au moins un élément de maintien antagoniste (7, 26, 41) dans la zone d'une face interne (12) de la première peau (4) peuvent être disposés respectivement face à face dans la zone de jonction transversale (8).

8. Dispositif (1, 24, 39) selon l'une des revendications 1 à 7, **caractérisé par le fait qu'**au moins un élément de maintien (6, 25, 40) dans la zone d'une face interne (12) de la première peau (4) et au moins un élément de maintien antagoniste (7, 26, 41) dans la zone d'une face externe (10) de la seconde peau (5) peuvent être disposés respectivement face à face dans la zone de jonction transversale (8).

9. Dispositif (1, 24, 39) selon l'une des revendications 1 à 8, **caractérisé par le fait qu'**une épaisseur de matériau des deux peaux (4, 5) et celle d'une éclisse de jonction sont respectivement inférieures ou égales à 5 mm.
